# FASCICULE DE BREVET EUROPEEN

(11) **EP 1 712 666 B1**
(45) Date de publication et mention de la délivrance du brevet: **07.05.2008**
(21) Numéro de dépôt: 06356047.8
(22) Date de dépôt: 14.04.2006
(51) Int. Cl.: D03C 5/02, F16D 1/06, F16H 53/00

(54) **Mécanique d'armure à cames, méthode d'assemblage d'une telle mécanique et métier à tisser comprenant une telle mécanique**
Nocken-Fachbildevorrichtung, Verfahren zum Zusammenfügen einer solchen Fachbildevorrichtung und Webmaschine mit einer solchen Fachbildevorrichtung
Cam shedding mechanism, method of assembling such a mechanism and loom comprising such a shedding mechanism

(30) Priorité: 15.04.2005 FR 0503787
(43) Date de publication de la demande: 18.10.2006
(73) Titulaire: STÄUBLI FAVERGES, 74210 Faverges (FR)
(72) Inventeur: Pages, Jean-Pierre, 74210 Faverges (FR); Tardy, Bastien, 74370 Argonay (FR)
(74) Mandataire: Myon, Gérard Jean-Pierre

(56) Documents cités:
- GB-A- 764 462
- US-A- 3 804 128

## Description

L'invention a trait à une mécanique d'armure à cames. L'invention a également trait à une rondelle-entretoise et à une came pour une telle mécanique, ainsi qu'à un métier à tisser équipé d'une telle mécanique et à une méthode d'assemblage d'une telle mécanique.

Dans le domaine des métiers à tisser, on connaît des mécaniques d'armure à cames qui comprennent une série de leviers oscillants, en nombre égal à celui des cadres de lisses à monter sur le métier. Chaque levier oscillant est prévu pour être attelé à l'un des cadres et équipé de deux galets qui coopèrent avec les deux pistes d'une came complémentaire entraînée en rotation par un arbre commun de la mécanique. Les cames doivent être montées sur un arbre d'entraînement auquel elles sont solidarisées en rotation par adhérence, sous l'effet d'un effort axial exercé par des moyens de serrage adaptés et connus, par exemple, de GB-A-764462, après que ces cames ont été réglées angulairement les unes par rapport aux autres en fonction de l'armure souhaitée.

Une telle liaison par adhérence est parfois insuffisante pour garantir une immobilisation ferme des cames par rapport à leur arbre d'entraînement. En effet, compte tenu des performances exigées pour les mécaniques à cames modernes, leurs vitesses de rotation sont de plus en plus importantes, au point que les couples exercés par les galets suiveurs sur les cames sont susceptibles de décaler angulairement les cames par rapport à cet arbre, ce qui induit un déréglage de la mécanique et la fabrication de tissus de qualité moindre.

C'est à ces inconvénients qu'entend plus particulièrement remédier l'invention en proposant une mécanique d'armure dont les cames peuvent être fixées de façon sécurisée sur leur arbre d'entraînement.

Dans cet esprit, l'invention concerne une mécanique d'armure à cames pour métier à tisser qui comprend plusieurs cames définissant chacune au moins une piste de roulement pour un galet suiveur, chaque came étant pourvue d'un alésage de centrage sur un arbre d'entraînement, alors que des moyens sont prévus pour exercer un effort de serrage parallèle à l'arbre d'entraînement. Cette mécanique est caractérisée en ce que :
- l'arbre est à section non circulaire ;
- au moins une rondelle-entretoise, dont le bord interne est non circulaire et adapté pour permettre un déplacement axial le long de l'arbre et une solidarisation en rotation de la rondelle-entretoise et de l'arbre, est disposée autour de l'arbre en appui contre l'une au moins des cames.

Dans une telle mécanique, la rondelle-entretoise peut être immobilisée en rotation par adhérence par rapport à la came, du fait de l'effort de serrage axial, alors que la coopération du bord interne de la rondelle-entretoise et de la surface périphérique non circulaire de l'arbre d'entraînement permet une solidarisation en rotation efficace entre la rondelle et l'arbre, par coopération de formes.

Selon des aspects avantageux mais non obligatoires de l'invention, une telle mécanique peut incorporer une ou plusieurs des caractéristiques suivantes, prises dans toute combinaison techniquement admissible :
- La rondelle-entretoise est comprimée, sous l'effet de l'effort de serrage, entre deux cames.
- L'une des cames, contre laquelle la rondelle-entretoise est en appui, est pourvue, sur l'une au moins de ses faces latérales perpendiculaires à sa ou ses pistes de roulement, d'un chambrage de réception de cette rondelle-entretoise. Dans ce cas, chaque came peut être pourvue d'un chambrage, alors qu'une rondelle-entretoise engagée autour de l'arbre est disposée dans chaque chambrage. Un ensemble formé d'une rondelle-entretoise et de la came dans le chambrage de laquelle est disposée cette rondelle peut avoir une épaisseur de 12 mm. En outre, la face de la rondelle-entretoise en place dans le chambrage s'étend de préférence à une distance de 6 mm par rapport à un plan médian de la came.
- L'alésage de centrage est au moins en partie circulaire, alors que la section de l'arbre d'entraînement est inscrite dans une enveloppe circulaire de rayon légèrement inférieur au rayon de l'alésage central des cames, ce qui permet l'ajustement de la position angulaire des cames par rapport à l'arbre. Dans ce cas, l'arbre d'entraînement est pourvu d'au moins une zone en creux par rapport à cette enveloppe circulaire, alors que le bord interne de la rondelle est pourvu d'au moins un relief apte à être engagé dans cette zone en creux. Au moins un bord de ce relief peut être sensiblement complémentaire d'un bord de fond de cette zone en creux.

L'invention concerne également un métier à tisser équipé d'une mécanique d'armure telle que précédemment décrite. Un tel métier est plus fiable, dans la mesure où le calage angulaire de ses cames est assuré, même lorsque le métier fonctionne à vitesse élevée.

Dans le cadre du même concept inventif global, l'invention concerne également une rondelle-entretoise de mécanique d'armure à cames pour un métier à tisser, cette rondelle étant plate, d'épaisseur constante et pourvue d'un bord interne non circulaire adapté pour permettre un déplacement axial le long d'un arbre d'entraînement des cames de la mécanique, ainsi qu'une solidarisation de la rondelle-entretoise en rotation avec cet arbre, cette rondelle étant également apte à être plaquée contre au moins une came de la mécanique sous l'effet d'un effort de serrage parallèle à cet arbre.

Toujours selon le même concept inventif global, l'invention concerne également une came de mécanique d'armure pour un métier à tisser, cette came définissant au moins une piste de roulement pour un galet suiveur tout en étant pourvue d'un alésage de centrage sur un arbre d'entraînement. Cette came est pourvue, sur au moins une de ses faces latérales perpendiculaires à la piste de roulement, d'un chambrage qui borde son alésage central et qui débouche dans cet alésage, ce chambrage étant apte à recevoir une rondelle-entretoise telle que mentionnée ci-dessus disposée autour de l'arbre d'entraînement lorsque la came est montée sur cet arbre.

Cette came peut être montée autour d'un arbre d'entraînement de mécanique d'armure tout en recevant dans son chambrage une rondelle permettant une solidarisation effective en rotation, par adhérence entre la came et la rondelle et par coopération de formes entre la rondelle et l'arbre d'entraînement.

De façon avantageuse, la came est pourvue, sur au moins une de ses faces latérales perpendiculaires à la piste de roulement, d'une rainure qui s'étend globalement selon une direction diamétrale de son alésage central.

L'invention concerne enfin une méthode d'assemblage d'une mécanique d'armure telle que précédemment décrite dans laquelle on fait coulisser chaque came le long de l'arbre d'entraînement jusqu'à atteindre sensiblement sa position prévue le long de cet arbre. Cette méthode comprend des étapes consistant à :
a) disposer au moins une rondelle-entretoise autour de l'arbre au voisinage de l'une au moins des cames ;
b) orienter chaque came par rapport à l'arbre d'entraînement, et
c) immobiliser les cames, par rapport à l'arbre d'entraînement et les unes par rapport aux autres, en exerçant un effort, parallèle à l'arbre, de serrage des cames et de la ou des rondelles-entretoises.

Selon un aspect avantageux de cette méthode, on peut prévoir une étape supplémentaire consistant à :
d) engager, dans une rainure aménagée sur une des faces latérales d'au moins une came, une pige qui fait saillie radialement vers l'extérieur par rapport à sa ou ses pistes de roulement, alors que,
e) lors de l'étape b), on oriente chaque came équipée d'une rainure en amenant la pige engagée dans cette rainure en appui contre une butée fixe.

Cette méthode facilite le réglage angulaire des cames dont la position peut être facilement trouvée par l'opérateur qui sait qu'il doit amener la pige en appui contre la butée fixe correspondante. L'ordre des étapes a) et d) peut être inversé.

De façon avantageuse, lorsqu'une rondelle-entretoise est disposée entre deux cames, la pige engagée dans la rainure de l'une de ces cames est à distance de la face en regard de l'autre tige, alors que, en l'absence de rondelle-entretoise, la pige est en appui contre la face en regard sous l'effet de l'effort de serrage. L'épaisseur de la partie de la pige qui fait saillie axialement par rapport à la rainure dans laquelle elle est engagée est inférieure à l'épaisseur de la partie de la rondelle-entretoise qui dépasse axialement du chambrage correspondant ou de l'épaisseur totale de la rondelle lorsqu'il n'est pas prévu de chambrage. Ainsi, lorsque la rondelle est en place, la pige peut être retirée au terme du réglage de la position angulaire de la came. Au contraire, si la rondelle-entretoise a été oubliée lors du montage, la pige est serrée entre deux cames adjacentes, ce qui empêche ou gêne fortement son retrait. L'opérateur se rend alors immédiatement compte de son oubli.

L'invention sera mieux comprise et d'autres avantages de celle-ci apparaîtront plus clairement à la lumière de la description qui va suivre de deux modes de réalisation, d'une mécanique d'armure, de rondelles-entretoises, de cames, d'un métier à tisser et de méthodes conformes à son principe, donnée uniquement à titre d'exemple et faite en référence aux dessins annexés dans lesquels :
- la figure 1 est une représentation schématique partielle de principe d'un métier à tisser conforme à l'invention, une partie de la mécanique étant arrachée pour la clarté du dessin ;
- la figure 2 est une section partielle de principe selon la ligne II-II à la figure 1 ;
- la figure 3 est une vue à plus grande échelle du détail III à la figure 2 ;
- la figure 4 est une coupe selon la ligne IV-IV à la figure 2 ;
- la figure 5 est une vue de face à plus grande échelle d'une rondelle-entretoise de la mécanique de l'invention ;
- la figure 6 est une vue de face d'une came conforme à l'invention utilisée dans la mécanique de l'invention ;
- la figure 7 est une section transversale, à la même échelle que la figure 5 et de principe, de l'arbre 22 au niveau de la ligne IV-IV à la figure 2 ;
- la figure 8 est une vue en perspective de la mécanique des figures précédentes en cours d'assemblage ;
- la figure 9 est une section partielle à plus grande échelle selon la ligne IX-IX à la figure 8 ; et
- la figure 10 est une vue analogue à la figure 3 pour une mécanique conforme à un second mode de réalisation de l'invention.

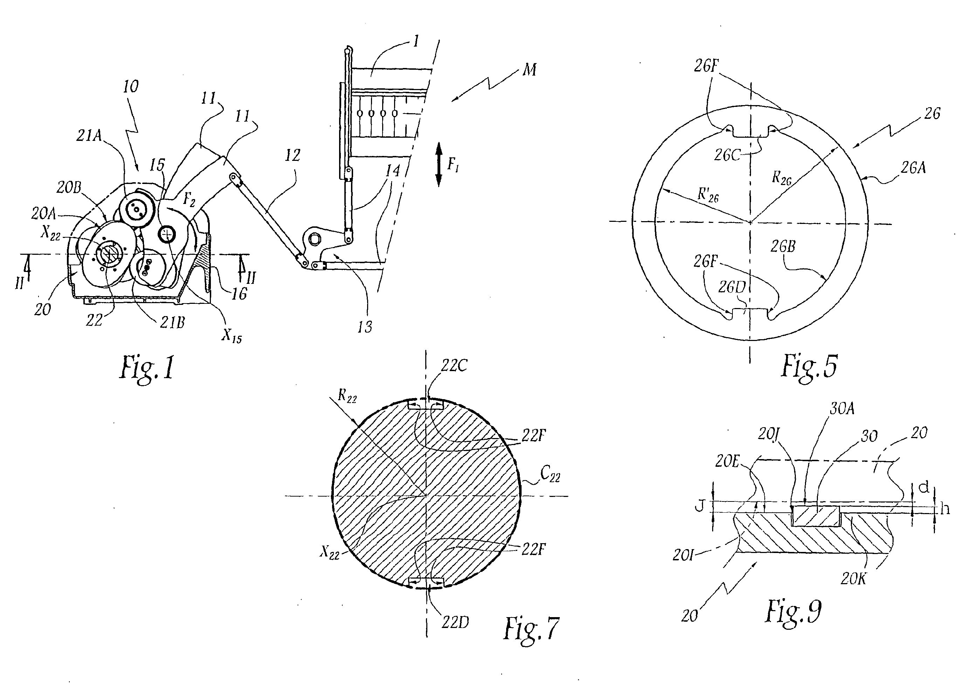

Le métier M représenté à la figure 1 comprend plusieurs cadres de lisses dont un seul est visible sur cette figure avec la référence 1. Les différents cadres du métier M sont animés d'un mouvement d'oscillations verticales représenté par la double flèche F₁ et imprimé par une mécanique à cames 10 dont les leviers de sortie 11 attaquent respectivement des bielles 12 associées à des leviers coudés 13 reliés entre eux et au cadre par des bielles 14.

Les leviers 11 sont prévus en nombre équivalent au nombre de cadres de lisses 1 et montés pivotants, comme représenté par la double flèche F₂, autour de l'axe longitudinal X₁₅ d'un arbre commun 15 soutenu par le bâti 16 de la mécanique 10. La mécanique 10 comprend également plusieurs cames complémentaires 20 définissant chacune deux pistes 20A, 20B sur lesquelles viennent respectivement en appui des galets 21A, 21B, portés par paire par les leviers 11.

Les cames 20 sont montées sur un arbre commun 22 qui est supporté par le bâti 16 et dont une première extrémité 22A porte une roue 23 à denture conique destinée à coopérer avec un pignon 24 à denture conique en formant un réducteur permettant l'entraînement de l'arbre 22 autour de son axe longitudinal X₂₂.

Deux paliers 25A et 25B permettent au bâti 16 de supporter l'arbre 22 respectivement entre son extrémité 22A et les cames 20 et au voisinage de l'extrémité opposée 22B de l'arbre 22.

Les cames 20 sont enfilées autour de l'arbre 22 et chacune pourvues, pour ce faire, d'un alésage central 20C à section circulaire centrée sur un axe X₂₀ destiné à être confondu avec l'axe X₂₂ lorsque une came est montée sur l'arbre 22.

L'alésage 20C peut n'être que partiellement circulaire, c'est-à-dire avoir un bord formé de plusieurs arcs de cercle disjoints.

Comme il ressort plus particulièrement de la figure 7, l'arbre 22 est à section globalement circulaire centré sur son axe X₂₂ et pourvu de deux rainures longitudinales 22C et 22D qui s'étendent sur la longueur de sa partie 22E destinée à recevoir les cames 20. On note C₂₂ la surface d'enveloppe cylindrique à base circulaire de la partie 22E et R₂₂ le rayon de cette surface. On note R₂₀ le rayon de l'alésage 20C. Le rayon R₂₀ a une valeur légèrement supérieure à celle du rayon R₂₂, ce qui permet de faire coulisser chaque came 20 sur la partie 22E de l'arbre 22.

Lorsque l'alésage 20C est partiellement circulaire, le rayon de ses parties en arc de cercle est choisi comme indiqué ci-dessus pour le rayon R₂₀.

Chaque came 20 est pourvue d'un chambrage 20D qui est ménagé sur une face latérale 20E de la came 20, c'est-à-dire une face perpendiculaire aux pistes 20A et 20B. Ce chambrage est également circulaire et centré sur l'axe X₂₀. On note R'₂₀ son rayon extérieur. Le chambrage 20D de chaque came 20 est débouchant dans l'alésage 20C de cette came.

Au voisinage de son bord périphérique externe 20F, le chambrage 20D est pourvu d'un dégagement 20G ménagé sous la forme d'une gorge jouxtant le bord 20F.

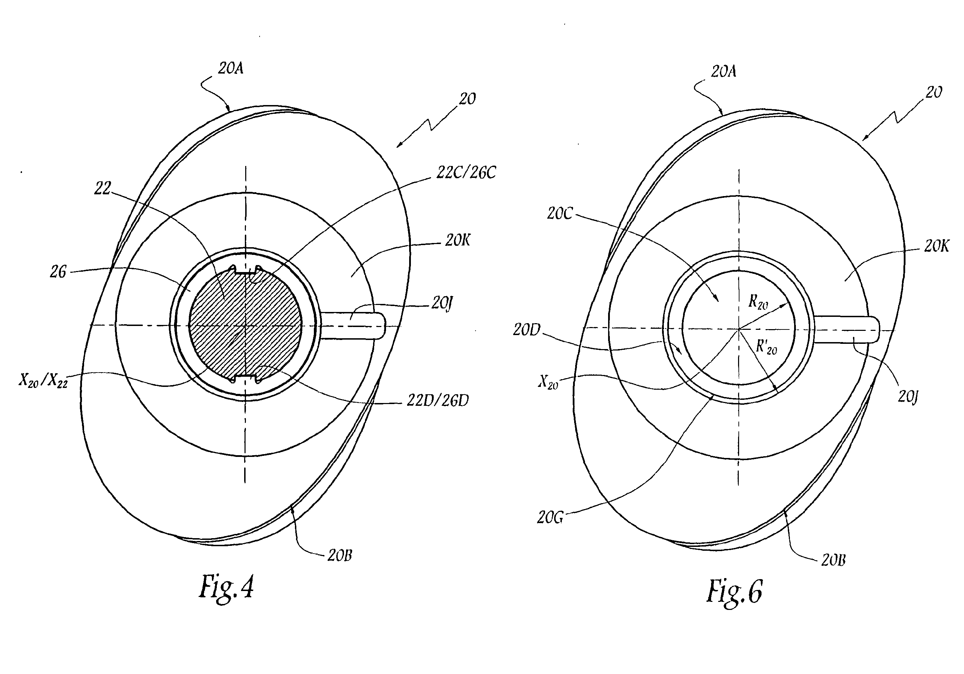

Dans chaque chambrage 20D est reçue une rondelle-entretoise 26 plus particulièrement visible à la figure 5 et dont le bord externe 26A est circulaire, avec un rayon R₂₆ inférieur au rayon R'₂₀. Le bord interne 26B de la rondelle 26 présente deux portions circulaires de rayon R'₂₆ légèrement supérieur au rayon R₂₂, ainsi que deux dents 26C et 26D de dimensions adaptées pour être respectivement engagées dans les rainures 22C et 22D, comme représenté à la figure 4.

Les faces latérales 26F des dents 26C et 26D sont sensiblement complémentaires des côtés 22F des rainures 22C et 22D, alors que les dents 26C et 26D peuvent coulisser dans les rainures 22C et 22D parallèlement à l'axe X₂₂.

Ainsi, une rondelle 26 peut être en place dans le chambrage 20D d'une came 20, alors que ses dents 26C et 26D sont engagées dans les rainures 22C et 22D. Tant que les cames ne sont pas serrées les unes contre les autres, la rondelle 26 peut glisser dans le chambrage 20D, tout en étant solidaire en rotation de l'arbre 22, ce qui permet le réglage de la position angulaire de la came.

Un couple peut être transmis de l'arbre 22 à chaque rondelle 26 par la coopération des bords 26F et des côtés 22F.

Comme il ressort plus particulièrement de la figure 5, chaque rondelle-entretoise 26 est plate et d'épaisseur constante.

L'épaisseur e₂₆ d'une rondelle 26 est supérieure à la profondeur p₂₀ du chambrage 20D dans lequel elle est disposée, de telle sorte que, lorsqu'une rondelle 26 est disposée dans un chambrage 20D correspondant, elle dépasse de la face 20E de la came 20 dans laquelle est ménagé ce chambrage, sur une largeur 1 non nulle mais relativement faible par rapport à la largeur de la came 20.

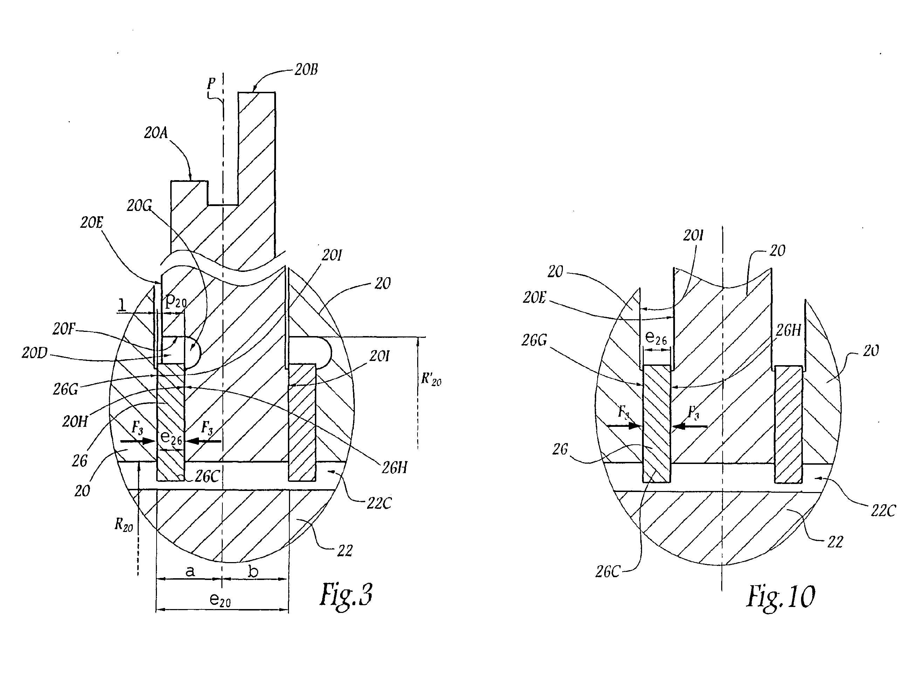

Ainsi, l'ajout d'une rondelle-entretoise 26 dans un chambrage 20D n'augmente pas sensiblement l'épaisseur de l'ensemble formé de la rondelle 26 et de la came 20 associée, notée e₂₀ sur la figure 3, par rapport à l'épaisseur de la seule came. L'épaisseur de l'ensemble 20+26 est, en pratique, de 12 mm. On note P un plan médian des pistes 20A et 20B d'une came 20, c'est-à-dire un plan situé à égale distance de ces pistes. On note 26G la face latérale de la rondelle 26 disposée dans le chambrage 20D de cette came, cette face 26G étant opposée au fond 20H du chambrage. La face 26G est située à une distance a, prise parallèlement à l'axe X₂₂, du plan P égale à 6 mm. La distance b, prise parallèlement à l'axe X₂₂, entre le plan P et la face 20I de la came 20 opposée au chambrage 20D est égale à 6 mm. La came 20 présente une légère sur-épaisseur au niveau de la partie de la face 20I disposée en regard d'une rondelle 26, ce qui assure un appui franc entre cette face et la rondelle, sans interférence avec la face 20E d'une came adjacente.

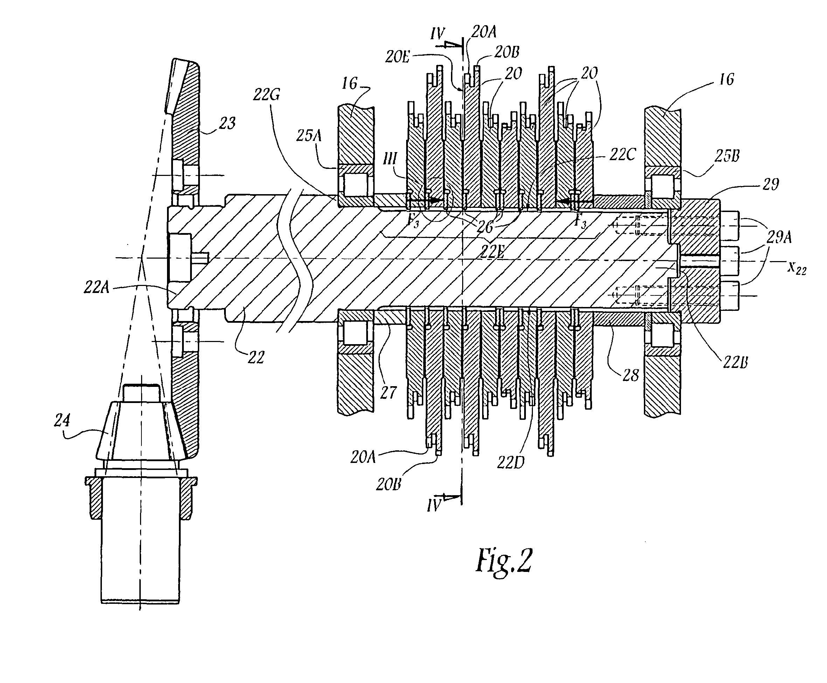

La valeur des distances a et b et de l'épaisseur e₂₀ permet de retourner les cames 20 par rapport à leur plan P, comme représenté par deux d'entre elles à la figure 2.

On note J le jeu entre les cames 20 adjacentes dans leurs parties qui ne sont pas en contact à travers une rondelle-entretoise 26. Ce jeu est égal à la distance entre les faces 20E et 20I en regard, radialement à l'extérieur du chambrage 20D.

Le dégagement 20G prévu dans chaque chambrage 20D permet un appui franc de la rondelle-entretoise 26 correspondante contre le fond 20H du chambrage, sans risque qu'un congé ne vienne repousser le bord 26A de cette rondelle.

En pratique, chacune des cames 20 équipant l'arbre 22 est pourvue d'un chambrage 20D dans lequel est disposée une rondelle-entretoise 26. Ceci n'est cependant pas obligatoire et l'on peut imaginer une mécanique dans laquelle seule certaines cames sont équipées d'un chambrage et d'une rondelle.

Une bague 27 est disposée autour de l'arbre 22 entre le palier 25A et les éléments 20 et 26, le palier 25A étant en appui contre un épaulement 22G de l'arbre. Une autre bague 28 est disposée entre les éléments 20 et 26, et l'extrémité 22B de l'arbre 22, alors qu'un dispositif de serrage 29 est prévu sur cette extrémité. En serrant les vis 29A du dispositif 29, il est possible d'exercer entre les bagues 27 et 28, un effort de serrage F₃ parallèle à l'axe X₂₂, c'est-à-dire axial par rapport à l'arbre 22. Comme représenté à la figure 3, cet effort axial a pour effet de plaquer fermement la rondelle 26 contre le fond 20H du chambrage 20D et contre la face 20I de la came 20 adjacente.

Comme la rondelle 26 est en appui contre la sur-épaisseur de la face 20I de la came adjacente, on obtient une solidarisation ferme par adhérence des faces latérales 26G et 26H de la rondelle 26 avec la face 20I de la came adjacente et avec le fond 20H du chambrage 20D. Les éléments 20 et 26 sont ainsi rendus solidaires en rotation. En outre, par la coopération de formes des dents 26C et 26D et des rainures 22C et 22D, on obtient une solidarisation efficace en rotation de l'arbre 22 et de la rondelle-entretoise 26 et, par là même, de l'arbre 22 et de la came 20. Les éléments 22C, 22D, 26C et 26D forment donc des reliefs complémentaires de solidarisation en rotation et de transmission de couple entre l'arbre 22 et la rondelle-entretoise 26.

Les risques de décalage angulaire d'une ou plusieurs cames 20 par rapport à l'arbre 22 sont ainsi évités lorsque l'effort F₃ est exercé.

Les différentes rondelles 26 permettent en quelque sorte une « reprise », au niveau de chacune des cames équipée d'un chambrage 20D, du couple de solidarisation par adhérence résultant de l'effort F₃. En effet, par rapport à une mécanique de l'art antérieur dans laquelle le couple de solidarisation par adhérence entre deux cames correspond sensiblement au couple total d'adhérence dû à l'effort de serrage axial divisé par le nombre de cames, les chambrages 20D permettent d'obtenir, au niveau de chaque came disposée entre deux rondelles 26 solidaires en rotation de l'arbre 22, un couple de solidarisation sensiblement égal au couple total dû à l'effort de serrage axial.

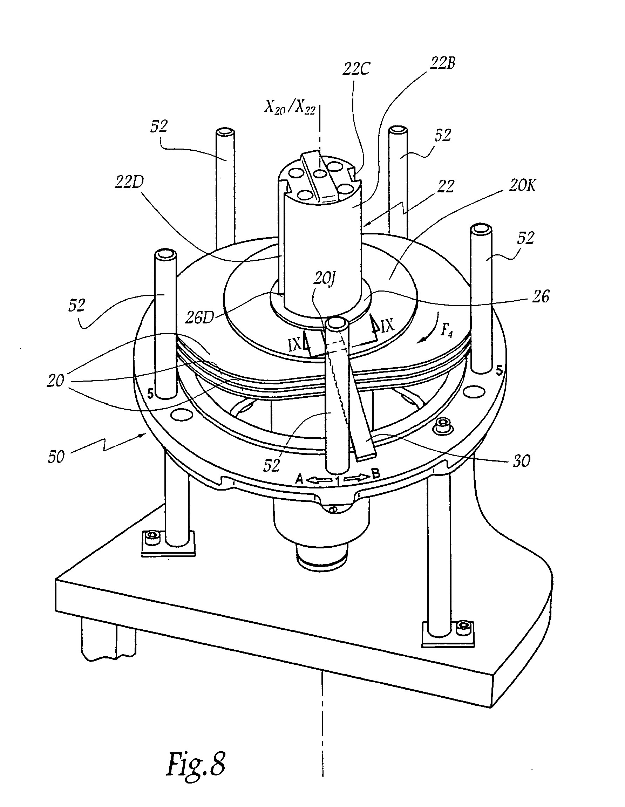

Chaque came 20 est pourvue, dans sa surface 20E, d'une rainure 20J qui s'étend globalement selon une direction radiale par rapport à l'axe X₂₀ et qui est destinée à recevoir une pige 30, comme représentée à la figure 8. La rainure 20J est ménagée dans une sur-épaisseur 20K à section circulaire de la came et s'étend du voisinage du chambrage 20D jusqu'au-delà du bord externe de cette surépaisseur.

Lors du montage de la mécanique 10, chaque came 20 est disposée autour de l'arbre 22 puis une pige 30 est mise en place dans la rainure 20J correspondante, alors qu'une rondelle 26 est installée dans le chambrage 20D de la came 20, en faisant coulisser les dents 26C et 26D dans les rainures 22C et 22D, ce que permet la géométrie de ces reliefs. La partie de la pige 30 qui dépasse radialement des pistes 20A et 20B de la came est alors amenée en appui contre l'une de plusieurs butées 52 appartenant à un gabarit 50 de positionnement de l'arbre 22 et des cames 20. Le fait d'amener la pige 30 en butée contre une butée 52, alors que la pige reste en place dans la rainure 20J correspondante, induit un pivotement de la came 20 autour de l'axe X₂₂, comme représenté par la flèche F₄, ce qui permet d'orienter la came par rapport à l'arbre 22. Le fait d'amener successivement en butée les piges 30 des différentes cames 20 contre l'une des butées 52 permet de régler l'orientation relative des cames 20 les unes par rapport aux autres en fonction du mouvement d'armure recherché.

A la figure 8, seule une pige 30 est représentée pour la clarté du dessin. En pratique, une pige est prévue pour chaque came 20.

Lorsque les différentes cames 20 ont été positionnées le long de l'arbre 22 et lorsqu'elles ont été réglées angulairement en amenant leurs piges respectives contre l'une des butées 52, on immobilise ces cames par rapport à l'arbre 22 et les unes par rapport aux autres en mettant en place le dispositif 29 et en serrant ses vis de façon à exercer l'effort F₃ qui immobilise fermement les cames comme mentionné ci-dessus. On retire alors les piges 30 en les tirant chacune selon la direction, radiale par rapport aux axes X₂₀ et X₂₂, de la rainure 20J correspondante. L'épaisseur des piges 30 est choisie de telle sorte que chaque pige 30 dépasse légèrement de la rainure 20J dans laquelle elle est introduite, par rapport à la surface 20E, sur une hauteur h strictement inférieure au jeu J lorsqu'une rondelle 26 est en place dans le chambrage 20D.

A la figure 9, on a représenté en traits mixtes une came 20 superposée à celle qui est équipée de la pige à la figure 8. On note d la distance entre la face 30A de la pige 30, qui est parallèle à la face 20E et opposée au fond de la rainure 20J, et la face 20I de la came adjacente. Le jeu J est égal à la somme de d et h. On choisit la géométrie des cames 20 de telle sorte que, en l'absence de rondelle-entretoise 26 et lorsque l'effort F₃ est appliqué, le jeu J tend à prendre une valeur J' inférieure à la hauteur h.

Ainsi, si une rondelle-entretoise 26 a été mise en place dans le chambrage de la came 20 correspondante, la pige 30 n'est pas en contact avec la surface 20I de la came adjacente, ce qui permet un retrait de la pige 30, même une fois l'effort F₃ appliqué, par glissement selon la direction longitudinale de la rainure 20J. Au contraire, si la rondelle 26 a été oubliée par l'opérateur, l'effort F₃ a pour effet de plaquer fermement la pige 30 contre la surface 20I de la came adjacente, ce qui a pour effet de coincer la pige 30. L'opérateur peut alors détecter immédiatement qu'une des rondelles-entretoises est manquante.

Comme représenté à la figure 2, les faces 20E de deux cames 20 adjacentes peuvent être disposées en regard, leurs chambrages 20D et les rondelles-entretoises associées se faisant alors face. Ces rondelles 26 sont alors en appui l'une contre l'autre et solidarisées en rotation sous l'effet de l'effort F₃.

Le ou les chambrages 20D sont réalisés par usinage de la face 20E de chaque came concernée. Ils peuvent également être réalisés lors du moulage de la came. En variante, l'ébauche du chambrage est obtenue lors du moulage et les faces de définition du chambrage, à savoir son fond 20H et son bord 20F, sont usinées lors de la finition de la came.

Dans le second mode de réalisation de l'invention représenté à la figure 10, les éléments analogues à ceux du premier mode de réalisation portent des références identiques. Les cames 20 représentées partiellement sur cette figure sont dépourvues de chambrage, la rondelle-entretoise 26 étant comprimée par l'effort de serrage axial F₃ entre les faces en regard 20E et 20I de ces cames. Dans l'exemple représenté, les surfaces 20E et 20I sont chacune pourvues d'une sur-épaisseur annulaire de diamètre extérieur légèrement inférieur au diamètre extérieur de la bague 26. Ceci n'est cependant pas obligatoire et les faces 20E et 20I pourraient être totalement planes.

Comme précédemment, le couple d'entraînement provenant de l'arbre 22 est transmis à la rondelle 26 grâce au fait que ses dents, dont l'une est repérée par la référence 26C, sont engagées dans les rainures de l'arbre 22, dont l'une est repérée avec la référence 22C. Le couple est transmis de la rondelle-entretoise 26 aux cames 20 par adhérence entre les faces latérales 26G et 26H de la rondelle 26 et les surfaces correspondantes 20E et 20I des cames 20 en appui contre la rondelle sous l'effet de l'effort F₃.

Lors de l'assemblage de la mécanique, on utilise également des piges du type des piges 30, les cames 20 étant chacune pourvues d'une rainure du type de la rainure 20J. En l'absence de chambrage sur les cames, on veille à ce que l'épaisseur de la partie de ces piges qui dépassent alors des rainures soit inférieure à l'épaisseur e₂₆ de la rondelle-entretoise 26 correspondante.

L'invention n'est pas limitée aux modes de réalisation représentée et peut faire l'objet d'aménagements ou de modification dans le cadre défini par les revendications annexées. Par exemple, un chambrage peut être prévu sur chacune des faces latérales d'une came. La rainure 20J peut être ménagée sur la face opposée à celle équipée du chambrage.

## Revendications

1. Mécanique d'armure à cames (10) pour métier à tisser, ladite mécanique comprenant plusieurs cames (20) définissant chacune au moins une piste (20A, 20B) de roulement pour un galet suiveur (21A, 21B), chaque came étant pourvue d'un alésage (20C) de centrage sur un arbre d'entraînement (22), alors que des moyens (27-29) sont prévus pour exercer un effort de serrage (F₃) parallèle audit arbre, **caractérisée en ce que** :
- ledit arbre (22) est à section non circulaire ;
- au moins une rondelle-entretoise (26), dont le bord interne (26B) est non circulaire et adapté pour permettre un déplacement axial le long dudit arbre (22) et une solidarisation en rotation de ladite rondelle-entretoise avec ledit arbre, est disposée autour dudit arbre en appui contre l'une au moins desdites cames (20).

2. Mécanique selon la revendication 1, **caractérisée en ce que** ladite rondelle-entretoise (26) est comprimée, sous l'effet dudit effort (F₃), entre deux cames (20).

3. Mécanique selon l'une des revendications précédentes, **caractérisée en ce que** l'une desdites cames (20), contre laquelle ladite rondelle-entretoise est en appui, est pourvue, sur l'une (20E) au moins de ses faces latérales perpendiculaires à sa ou ses pistes de roulement (20A, 20B), d'un chambrage de réception de ladite rondelle-entretoise (26).

4. Mécanique selon la revendication 3, **caractérisée en ce qu'**un ensemble (20+26) formé d'une rondelle-entretoise (26) et de la came (20) dans le chambrage (20D) de laquelle est disposée ladite rondelle a une épaisseur (e₂₀) de 12 mm.

5. Mécanique selon la revendication 4, **caractérisée en ce que** la face (26G) de la rondelle-entretoise en place dans ledit chambrage (20D) s'étend à une distance (a) de 6 mm par rapport à un plan médian (P) de ladite came.

6. Mécanique selon l'une des revendications 3 à 5, **caractérisée en ce que** chaque came (20) est pourvue d'un chambrage (20D) et **en ce qu'**une rondelle-entretoise (26) engagée autour dudit arbre (22) est disposée dans chaque chambrage.

7. Mécanique selon l'une des revendications précédentes, **caractérisée en ce que** ledit alésage central (20C) est au moins en partie circulaire, **en ce que** la section dudit arbre est inscrite dans une enveloppe circulaire (C₂₂) de rayon (R₂₂) inférieur au rayon (R₂₀) dudit alésage, **en ce que** ledit arbre (22) est pourvu d'au moins une zone en creux (22C, 22D) par rapport à ladite enveloppe circulaire (C₂₂) et **en ce que** ledit bord interne (26B) est pourvu d'au moins un relief (26C, 26D) apte à être engagé dans ladite zone en creux.

8. Mécanique selon la revendication 7, **caractérisée en ce qu'**au moins un bord (26F) dudit relief (26C, 26D) est sensiblement complémentaire d'un bord (22F) de ladite zone en creux (22C, 22D).

9. Métier à tisser (M) équipé d'une mécanique d'armure (10) selon l'une des revendications précédentes.

10. Rondelle-entretoise (26) de mécanique d'armure (10) à cames (20) selon l'une des revendications 1 à 8 pour métier à tisser (M), ladite rondelle étant plate, d'épaisseur (e₂₆) constante et pourvue d'un bord interne (26B) non circulaire adapté pour permettre un déplacement axial le long d'un arbre d'entraînement (22) des cames (20) de ladite mécanique, ainsi qu'une solidarisation de ladite rondelle-entretoise en rotation avec ledit arbre, alors que ladite rondelle est apte à être plaquée contre au moins une came (20) de ladite mécanique sous l'effet d'un effort (F₃) de serrage parallèle audit arbre.

11. Came (20) de mécanique d'armure selon l'une des revendications 1 à 8 pour métier à tisser, ladite came définissant au moins une piste (20A, 20B) de roulement pour galet suiveur (21A, 21B) et étant pourvue d'un alésage (20C) de centrage sur un arbre d'entraînement (22), **caractérisée en ce que** ladite came est pourvue, sur une (20E) au moins de ses faces latérales perpendiculaires à ladite piste, d'un chambrage (20D) bordant ledit alésage et débouchant dans ledit alésage, ledit chambrage étant apte à recevoir une rondelle-entretoise (26), disposée autour dudit arbre d'entraînement, lorsque ladite came est montée sur ledit arbre.

12. Came selon la revendication 11, **caractérisée en ce qu'**elle est pourvue, sur au moins une (20E) de ses faces latérales perpendiculaires à ladite piste, d'une rainure (20J) s'étendant globalement selon une direction diamétrale dudit alésage (20C).

13. Méthode d'assemblage d'une mécanique d'armure (10) selon l'une des revendications 1 à 8 ou incorporant au moins une rondelle-entretoise selon la revendication 10 et plusieurs cames selon l'une des revendications 11 ou 12, dans laquelle on fait coulisser chaque came (20) le long dudit arbre (22), jusqu'à atteindre sensiblement sa position prévue le long dudit arbre, **caractérisée en ce qu'**elle comprend des étapes consistant à :
a) disposer au moins une rondelle-entretoise (26) autour dudit arbre au voisinage de l'une au moins desdites cames ;
b) orienter (F₄) chaque came (20) par rapport audit arbre, et
c) immobiliser lesdites cames par rapport audit arbre et les unes par rapport aux autres en exerçant un effort (F₃), parallèle audit arbre, de serrage des cames et de ladite ou desdites rondelles-entretoises.

14. Méthode selon la revendication 13, **caractérisée en ce qu'**elle comprend une étape consistant à :
d) engager, dans une rainure (20J) ménagée sur une (20E) des faces latérales d'au moins une came, une pige (30) qui fait saillie radialement vers l'extérieur par rapport à sa ou ses pistes de roulement (20A, 20B) et **en ce que**,
e) lors de l'étape b), on oriente (F₄) chaque came (20) équipée d'une rainure (20J) en amenant la pige (30) engagée dans cette rainure en appui contre une butée fixe (52).

15. Méthode selon la revendication 14, **caractérisée en ce que**, lorsqu'une entretoise (26) est disposée entre deux cames adjacentes (20), la pige (30) engagée dans la rainure (20J) de l'une de ces cames est à distance (d) de la face (20I) en regard de l'autre came et **en ce que**, en l'absence de rondelle-entretoise, ladite pige (30) est en appui contre ladite face en regard (20I) sous l'effet dudit effort de serrage (F₃).

## Claims

1. A cam motion (10) for a loom, said motion comprising a plurality of cams (20) each defining at least one rolling track (20A, 20B) for a cam follower (21A, 21B), each cam being provided with a bore (20C) for centring on a drive shaft (22), while means (27-29) are provided for exerting a clamping force (F₃) parallel to said shaft,
**characterised in that**:
- said shaft (22) is of non-circular section;
- at least one spacing washer (26), the inner edge (26B) of which is non-circular and suitable for permitting axial displacement along said shaft (22) and rotating interlocking of said spacing washer with said shaft, is arranged around said shaft, bearing against one at least of said cams (20).

2. A motion according to Claim 1, **characterised in that** said spacing washer (26) is compressed, under the action of said force (F₃), between two cams (20).

3. A motion according to one of the preceding claims, **characterised in that** one of said cams (20), against which said spacing washer bears, is provided, on one (20E) at least of its lateral faces perpendicular to its roller track(s) (20A, 20B), with a counterbore for receiving said spacing washer (26).

4. A motion according to Claim 3, **characterised in that** an assembly (20+26) formed of a spacing washer (26) and the cam (20) in the counterbore (20D) of which said washer is arranged has a thickness (e₂₀) of 12 mm.

5. A motion according to Claim 4, **characterised in that** the face (26G) of the spacing washer in place in said counterbore (20D) extends at a distance (a) of 6 mm relative to a median plane (P) of said cam.

6. A motion according to one of Claims 3 to 5, **characterised in that** each cam (20) is provided with a counterbore (20D) and **in that** a spacing washer (26) engaged around said shaft (22) is arranged in each counterbore.

7. A motion according to one of the preceding claims, **characterised in that** said central bore (20C) is at least in part circular, **in that** the section of said shaft is inscribed in a circular envelope (C₂₂) of radius (R₂₂) less than the radius (R₂₀) of said bore, **in that** said shaft (22) is provided with at least one recessed zone (22C, 22D) relative to said circular envelope (C₂₂) and **in that** said inner edge (26B) is provided with at least one relief (26C, 26D) capable of engagement in said recessed zone.

8. A motion according to Claim 7, **characterised in that** at least one edge (26F) of said relief (26C, 26D) is substantially complementary to an edge (22F) of said recessed zone (22C, 22D).

9. A loom (M) equipped with a motion (10) according to one of the preceding claims.

10. A spacing washer (26) of a cam (20) motion (10) according to one of Claims 1 to 8 for a loom (M), said washer being flat, of constant thickness (e₂₆) and provided with a non-circular inner edge (26B) suitable for permitting axial displacement along a drive shaft (22) of the cams (20) of said motion, and also rotating interlocking of said spacing washer with said shaft, whereas said washer is capable of being flattened against at least one cam (20) of said motion under the action of a clamping force (F₃) parallel to said shaft.

11. A cam (20) of a motion according to one of Claims 1 to 8 for a loom, said cam defining at least one rolling track (20A, 20B) for a cam follower (21A, 21B) and being provided with a bore (20C) for centring on a drive shaft (22), **characterised in that** said cam is provided, on one (20E) at least of its lateral faces perpendicular to said track, with a counterbore (20D) bordering on said bore and opening into said bore, said counterbore being capable of receiving a spacing washer (26), arranged around said drive shaft, when said cam is mounted on said shaft.

12. A cam according to Claim 11, **characterised in that** it is provided, on at least one (20E) of its lateral faces perpendicular to said track, with a groove (20J) extending overall in a diametral direction of said bore (20C).

13. A method of assembly of a motion (10) according to one of Claims 1 to 8 or incorporating at least one spacing washer according to Claim 10 and a plurality of cams according to one of Claims 11 or 12, in which each cam (20) is made to slide along said shaft (22) until it reaches substantially its intended position along said shaft, **characterised in that** it comprises steps consisting of:
a) arranging at least one spacing washer (26) around said shaft in the vicinity of one at least of said cams;
b) orienting (F₄) each cam (20) relative to said shaft, and
c) immobilising said cams relative to said shaft and relative to one another by exerting a force (F₃), parallel to said shaft, for clamping cams and said spacing washer(s).

14. A method according to Claim 13, **characterised in that** it comprises a stage consisting of:
d) engaging, in a groove (20J) formed on one (20E) of the lateral faces of at least one cam, a rod (30) which protrudes radially towards the outside relative to its rolling track(s) (20A, 20B), and **in that**,
e) during step b), each cam (20) equipped with a groove (20J) is oriented (F₄) by bringing the rod (30) engaged in this groove to bear against a fixed stop (52).

15. A method according to Claim 14, **characterised in that**, when a spacer (26) is arranged between two adjacent cams (20), the rod (30) engaged in the groove (20J) of one of these cams is at a distance (d) from the face (201) opposite the other cam and **in that**, in the absence of a spacing washer, said rod (30) bears against said opposing face (201) under the action of said clamping force (F₃).

## Patentansprüche

1. Nocken-Schaftmaschine (10) für Webmaschinen, wobei die Vorrichtung mehrere Nocken (20) umfasst, die jeweils mindestens eine Ablaufbahn (20A, 20B) für eine Nachführrolle (21A, 21B) definieren, wobei jeder Nocken mit einer Bohrung (20C) zur Zentrierung auf eine Antriebswelle (22), wobei die Mittel (2 - 29) vorgesehen sind, um eine parallel zur Welle gerichtete Kraft (F₃) auszuüben, **dadurch gekennzeichnet, dass**
- die Welle (22) einen nicht kreisförmigen Querschnitt aufweist,
- mindestens eine Zwischenscheibe (26), deren innerer Rand (26B) nicht kreisförmig ist und angepasst ist, um eine axiale Verschiebung längs der Welle (22) und eine Drehverbindung der zwischenscheibe mit der Welle zu gestatten, um die Welle in Abstützung gegen mindestens einen der Nocken (20) angeordnet ist.

2. Maschine nach Anspruch 1, **dadurch gekennzeichnet, dass** die Zwischenscheibe (26) unter der Wirkung der Kraft (F₃) zwischen zwei Nocken (20) komprimiert wird.

3. Maschine nach einem der vorhergehenden Ansprüche, **dadurch gekennzeichnet, dass** einer der Nocken (20), gegen den sich die Zwischenscheibe abstützt, auf mindestens einer (20E) seiner Seitenflächen, senkrecht zu seiner oder seinen Ablaufbahnen (20A, 20B) mit einer Senkung zur Aufnahme der Zwischenscheibe (26) versehen ist.

4. Maschine nach Anspruch 3, **dadurch gekennzeichnet, dass** eine Anordnung (20+26), gebildet aus einer Zwischenscheibe (26) und dem Nocken (20), in dessen Senkung (20D) die Scheibe angeordnet ist, eine Dicke (e₂₀) von 12 mm aufweist.

5. Maschine nach Anspruch 4, **dadurch gekennzeichnet, dass** die Fläche (26G) der Zwischenscheibe in Stellung in der Senkung (20D) sich in einem Abstand (a) von 6 mm in Bezug auf die Mittelebene (P) des Nockens erstreckt.

6. Maschine nach einem der Ansprüche 3 bis 5, **dadurch gekennzeichnet, dass** jeder Nocken (20) mit einer Senkung (20D) versehen ist und dass eine Zwischenscheibe (26) in Eingriff mit der Welle (22) in jeder Senkung angeordnet ist.

7. Maschine nach einem der Anspruch 1, **dadurch gekennzeichnet, dass** die Mittelbohrung (20C) zumindest teilweise kreisförmig ist, dass der Querschnitt der Welle in eine kreisförmige Hülle (C₂₂) mit einem Radius (R₂₂) kleiner als der Radius (R₂₀) der Bohrung einbeschrieben ist, dass die Welle (22) mit mindestens einer ausgenommenen Zone (22C, 22D) in Bezug auf die kreisförmige Hülle (C₂₂) versehen ist und dass der Innenrand (26B) mit mindestens einer Erhebung (26C, 26D) versehen ist, die geeignet ist, in die ausgenommene Zone einzugreifen.

8. Maschine nach Anspruch 7, **dadurch gekennzeichnet, dass** mindestens ein Rand (26F) der Erhebung (26C, 26D) im Wesentlichen komplementär zu einem Rand (22F) der ausgenommenen Zone (22C, 22D) ist.

9. Webmaschine (M), ausgerüstet mit einer Nocken-Schaftmaschine (10) nach einem der vorhergehenden Ansprüche.

10. Zwischenscheibe (26) einex.Nocken(20)-Schaftmaschine (10) nach einem der Ansprüche 1 bis 8 für Webmaschinen (M), wobei die Scheibe flach, von einer konstanten Dicke (e₂₆) ist und mit einem nicht kreisförmigen Innenrand (26B) versehen ist, der geeignet ist, um eine axiale Verschiebung längs einer Antriebswelle (22) der Nocken (20) der Maschine sowie eine Drehverbindung der Zwischenscheibe mit der Welle zu gestatten, wobei die Scheibe geeignet ist, gegen mindestens einen Nocken (20) der Maschine unter der Wirkung einer Klemmkraft (F₃) parallel zur Welle gedrückt zu werden.

11. Nocken (20) einer Schaftmaschine nach einem der Ansprüche 1 bis 8 für eine Webmaschine, wobei der Nocken mindestens eine Ablaufbahn (20A, 20B) für eine Nachführrolle (21A, 21B) definiert und mit einer Bohrung (20) zur Zentrierung auf eine Antriebswelle (22) versehen ist, **dadurch gekennzeichnet, dass** der Nocken auf mindestens einer (20F) seiner Seitenflächen senkrecht zu der Bahn mit einer an die Bohrung angrenzenden und in die Bohrung mündenden Senkung (20D) versehen ist, wobei die Senkung geeignet ist, eine Zwischenscheibe (26) aufzunehmen, die um die Antriebswelle herum angeordnet ist, wenn der Nocken auf der Welle angeordnet ist.

12. Nocken nach Anspruch 1, **dadurch gekennzeichnet, dass** er auf mindestens einer (20E) seiner Seitenflächen, senkrecht zur Bahn, mit einer Nut (20J) versehen ist, die sich im Ganzen gesehen in einer diametralen Richtung zur Bohrung (20C) erstreckt.

13. Verfahren zum Zusammensetzen einer Schaftmaschine (10) nach einem der Ansprüche 1 bis 8 oder mindestens eine Zwischenscheibe nach Anspruch 10 und mehrere Nocken nach einem der Ansprüche 11 oder 12 einschließend, bei dem man jeden Nocken (20) längs der Welle (22) gleiten lässt, bis er im Wesentlichen seine längs der Welle vorgesehene Position erreicht, **dadurch gekennzeichnet, dass** es Schritte umfasst, die darin bestehen:
a) mindestens eine Zwischenscheibe (26) um die Welle herum in der Nähe von mindestens einem der Nocken anzuordnen;
b) jeden Nocken (20) in Bezug auf die Welle auszurichten (F₄), und
c) die Nocken in Bezug auf die Welle und zueinander festzulegen, indem eine Kraft (F₃) parallel zur Welle für eine Klemmung der Nocken und der Zwischenscheibe(n) ausgeübt wird.

14. Verfahren nach Anspruch 13, **dadurch gekennzeichnet, dass** es einen Schritt umfasst, der darin besteht:
d) einen Pegelstab (30), der radial nach außen in Bezug auf die Ablaufbahnen (20A, 20B) mindestens eines Nockens hervorspringt, in eine Nut (20J) eingreifen zu lassen, die in eine (20E) der Seitenflächen des mindestens einen Nockens eingearbeitet ist, und
e) bei Schritt b) man jeden mit einer Nut (20J) ausgerüsteten Nocken (20) ausrichtet (F4), indem man den in diese Nut eingreifenden Pegelstab (30) in Abstützung gegen einen festen Anschlag (52) bringt,

15. Verfahren nach Anspruch 14, **dadurch gekennzeichnet, dass**, wenn eine Scheibe (26) zwischen zwei benachbarten Nocken (20) angeordnet wird, der in die Nut (20J) eines dieser Nocken eingreifende Pegelstab (30) mit Abstand (d) zu der dem anderen Nocken gegenüberstehenden Fläche (201) angeordnet wird, und dass ohne Zwischenscheibe der Pegelstab (30) in Abstützung gegen die gegenüberstehende Fläche (201) unter der wirkung der Klemmkraft (F₃) ist.
